(19) Europäisches Patentamt
European Patent Office
Office européen des brevets

(11) EP 2 083 640 B1

(12) EUROPEAN PATENT SPECIFICATION

(45) Date of publication and mention
of the grant of the patent:
20.09.2017 Bulletin 2017/38

(51) Int Cl.:
A23L 27/40 (2016.01)          A23P 10/35 (2016.01)
A23L 7/191 (2016.01)          A23L 33/16 (2016.01)
A23L 27/00 (2016.01)

(21) Application number: 07838801.4

(22) Date of filing: 25.09.2007

(86) International application number:
PCT/US2007/020669

(87) International publication number:
WO 2008/039453 (03.04.2008 Gazette 2008/14)

(54) **SEASONING AND METHOD FOR SEASONING A FOOD PRODUCT UTILIZING SMALL PARTICLE SEA SALT**

WÜRZE UND WÜRZVERFAHREN FÜR EIN NAHRUNGSMITTEL UNTER VERWENDUNG VON KLEINEN MEERSALZTEILCHEN

ASSAISONNEMENT ET PROCÉDÉ D'ASSAISONNEMENT D'UN PRODUIT ALIMENTAIRE AU MOYEN DE PETITES PARTICULES DE SEL DE MER

(84) Designated Contracting States:
AT BE BG CH CY CZ DE DK EE ES FI FR GB GR
HU IE IS IT LI LT LU LV MC MT NL PL PT RO SE
SI SK TR

(30) Priority: 27.09.2006 US 847724 P
27.09.2006 US 847725 P
27.09.2006 US 847734 P
27.09.2006 US 847739 P
20.02.2007 US 708667
20.06.2007 US 820530

(43) Date of publication of application:
05.08.2009 Bulletin 2009/32

(73) Proprietor: Givaudan SA
1214 Vernier (CH)

(72) Inventors:
• JOHNSON, Clinton
Omaha, NE 68104 (US)
• SMITH, Gordon
Omaha, NE 68118 (US)
• JENSEN, Michael
Omaha, NE 68102 (US)
• SCHILMOELLER, Lance
Omaha, NE 68130 (US)

(74) Representative: Hamer, Christopher K.
Mathys & Squire LLP
The Shard
32 London Bridge Street
London SE1 9SG (GB)

(56) References cited:
EP-A1- 0 518 507          WO-A1-01/05256
WO-A2-2008/005237         WO-A2-2008/039533
US-A- 3 097 952           US-A- 4 068 006
US-A- 4 220 667           US-A- 4 375 483
US-A- 4 563 359           US-A- 5 494 689
US-A1- 2006 088 648       US-B1- 6 207 205
US-B1- 6 569 478          US-B1- 6 623 772
US-B2- 6 534 102

**Description**

FIELD OF THE INVENTION

The present invention generally relates to the field of food seasoning technology, and more particularly to a food seasoning utilizing small sea salt.

BACKGROUND OF THE INVENTION

Salt has a rich history as a preservative, spice, flavor enhancer, and chemical feedstock. Salt is an essential nutrient which acts to maintain (1) concentration and volume of extracellular fluid, (2) osmotic pressure and body water balance, (3) acid-base equilibrium, (4) nerve and muscle function, and (5) glucose and other nutrient absorption.

From a dietary perspective, individuals may respond differently to varying intake levels of sodium, a prominent ingredient in table salt. Excessive sodium consumption may lead to detrimental effects on the circulatory system, such as high blood pressure, as well as kidney affections, water retention, and stomach ulcers. While excessive sodium intake is not a direct link to hypertension in all individuals, some individuals are deemed to be "salt-sensitive." Salt-sensitive individuals may have blood pressure increases when sodium intake is high or decreases when sodium intake is low. For people who are salt-sensitive, the risk of dying from cardiovascular problems is increased with high dietary salt, whether or not they are hypertensive. Salt may increase the reactivity of blood platelets in these individuals, causing more frequent blood clots. As a result, there may be an increased risk of stroke, heart attack, and kidney disease, even in the absence of hypertension. Consequently, a reduction in dietary sodium may be warranted for certain individuals.

Despite health concerns and nutrition recommendations, many people frequently consume an excessive amount of salt. The palatability and flavor of salt have ensured its continued demand, consumption, and use. While there is a recommendation for reduced dietary sodium intake, there is a strong demand for the flavor and organoleptic qualities of salt.

A number of products have attempted a solution to this problem; however, some of these products ineffectually attempt to simulate a salty flavor by producing composite substances that mimic the flavor of salt. An example includes combining an ammonium salt with a proteolyzed protein containing free amino acids. Consequently, there remains the need for a seasoning with similar salty taste and/or taste enhancement to that of sodium chloride, which may reduce the amount of dietary sodium.

SUMMARY OF THE INVENTION

Sea salt, having a mean particle size less than 20 microns, for flavoring a food product, enhancing or potentiating flavor, and/or reducing the amount of dietary sodium is described in accordance with exemplary embodiments of the present invention. Also described is a method for seasoning food products, whereby a second seasoning component may be selected for at least one of complementing a first seasoning component and reducing the amount of the first seasoning component required for producing a desirably flavored food product. For example, a snack food may require less sea salt with a mean particle size less than 20 microns as a component in a seasoning or as a separate seasoning while retaining or increasing the desirable salty flavor associated with sea salt when combined with other salts and/or flavorings.

Further described is a salty snack product, such as microwave popcorn, ready-to-eat popcorn, crackers, and cookies, including a sea salt seasoning with a mean particle size less than about 20 microns. Additionally, a seasoning including a first seasoning component and a second seasoning component selected for at least one of complementing the first seasoning component and reducing the amount of the first seasoning component required for producing a desirably flavored food product is described, wherein the second seasoning component may be potassium chloride, sodium chloride, larger sea salt, and/or other salts used for giving a saltier perception. The second seasoning may include other materials, such as bitterness maskers. The first seasoning component has a mean particle size less than 20 microns.

The accompanying drawings, which are incorporated in and constitute a part of the specification, illustrate an embodiment of the invention and together with the general description, serve to explain the principles of the invention.

BRIEF DESCRIPTION OF THE DRAWINGS

The numerous advantages of the present invention may be better understood by those skilled in the art by reference to the accompanying figures in which:

FIG. 1 is a model dose-response curve for determining a response for given concentrations of tastant A;

FIG. 2 is a model concentration versus time graph for a zero order reaction, a first order reaction, and a second order reaction for two initial concentrations of a given solute;

FIG. 3 is a graph illustrating salt particle surface area versus salt particle size, wherein the graph illustrates that the total surface area of a constant weight of salt increases when the mean particle size decreases;

FIG. 4 is a graphical representation illustrating elemental components that constitute sea salt;

FIG. 5 is a graphical representation illustrating elemental components constituting a sea salt blend with 57% less sodium;

FIG. 6 is a graph illustrating the effect of salt mean particle size on the intensity of salt perception at four predetermined times;

FIG. 7A is a graph illustrating the effect of salt type on the intensity of salt taste perception at four predetermined times;

FIG. 7B is a graph illustrating the effect of salt type on the intensity of salt taste perception at four predetermined times wherein potassium chloride is blended with the salt at a ratio of 0.5 potassium chloride to the amount of salt removed;

FIG. 7C is a graph illustrating the effect of salt type on the intensity of salt taste perception at four predetermined times wherein potassium chloride is blended with the salt at a ratio of 1.0 potassium chloride to the amount of salt removed;

FIG. 8 is a graph illustrating the effect of ten micron sea salt on the intensity of sea salt perception after four predetermined times;

## DETAILED DESCRIPTION OF THE INVENTION

Reference will now be made in detail to the presently preferred embodiments of the invention, examples of which are illustrated in the accompanying drawings.

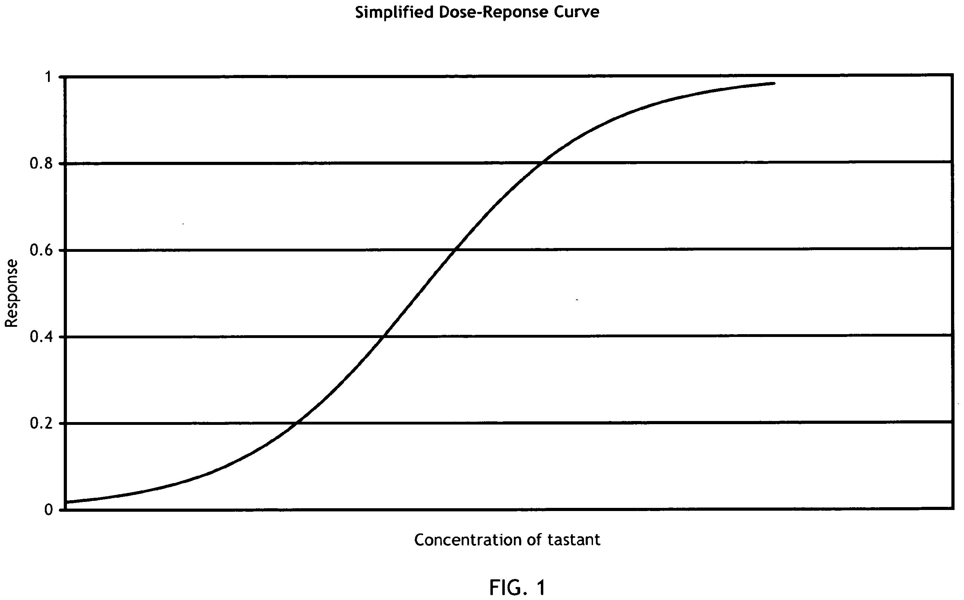

Referring generally to FIGS. 1 through 8, a seasoning and method for seasoning, including sea salt, having a mean particle size less than 20 $\mu$m, which provides, enhances, and potentiates flavor, is described in accordance with exemplary embodiments of the present invention. For instance, the food product may include seasoned snack foods, such as peanuts, pretzels, popcorn, and potato chips; meat products, such as beef, pork, and poultry; cheese products in liquid, solid, and semi-solid states; and other foods as required. In a specific embodiment, the food product is a charge of popcorn kernels disposed within a bag configured for microwave cooking. In this embodiment, the seasoning is selected and may be dispensed on the food product before the food product is in a ready-to-eat state, such as before microwave cooking. Additionally, the seasoning may be dispensed after the food product is cooked, similar to the use of table salt or a salt spray in a cookware release composition. Sea salt having a mean particle size less than about 20 $\mu$m is not currently available for commercial sale.

In one embodiment, sea salt is applied to a food product for reducing sodium and/or enhancing and potentiating the food product flavor. Sea salt is often obtained from evaporating seawater, but may be created in other ways. Different salts derived from seawater may also be blended and processed to produce other sea salt products, such as reduced sodium sea salt. It has a mineral content that may give a different taste than common table salt. Sea salt, as referenced herein, may be defined in the following manner: 1) salt obtained by evaporating sea water; 2) mixture of salt obtained by evaporating sea water; 3) modified salt obtained by evaporating sea water, such as removing or altering a component; and 4) synthetic sea salt, such as a salt with added components, for replicating sea salt obtained by evaporating sea water.

Sea salt is often extracted from sea water by pumping the water into shallow pans. The salt content of the water is increased as the sun and wind evaporate the water. During the manufacturing process, the sea water is moved by gravity through a sequence of pans steadily increasing in salinity. Deposition of the sea salt begins when the water is saturated with salt. During deposition, many of the undesirable components precipitate, including calcium carbonate and gypsum. After the sea salt is crystallized, the salt is often further washed for human consumption.

Sea salt contains minerals and trace elements that are nutritionally beneficial, which may be missing from processed common table salt. Elements often present in sea salt include potassium and magnesium. Potassium may be effective for reducing blood pressure, reducing the incidence of kidney stones and heart arrhythmias, increasing muscle strength, and benefiting bones. Magnesium is a vital mineral and aids in the body's absorption of calcium, plays a key role in the strength and formation of bones and teeth, lower the chance of heart attack and stroke, and maintain proper muscle function. Moreover, sea salt often contains a reduced amount of sodium, sodium being detrimental to health in some people.

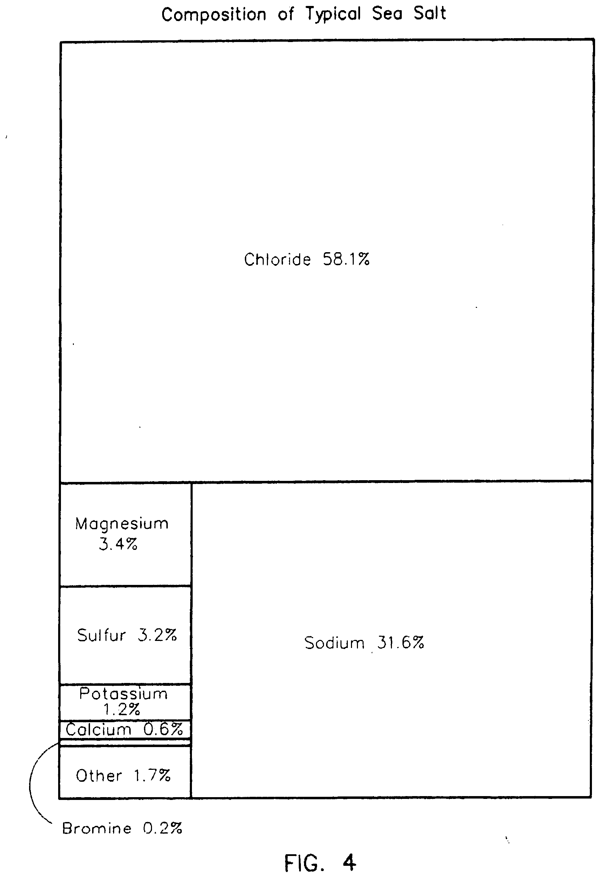

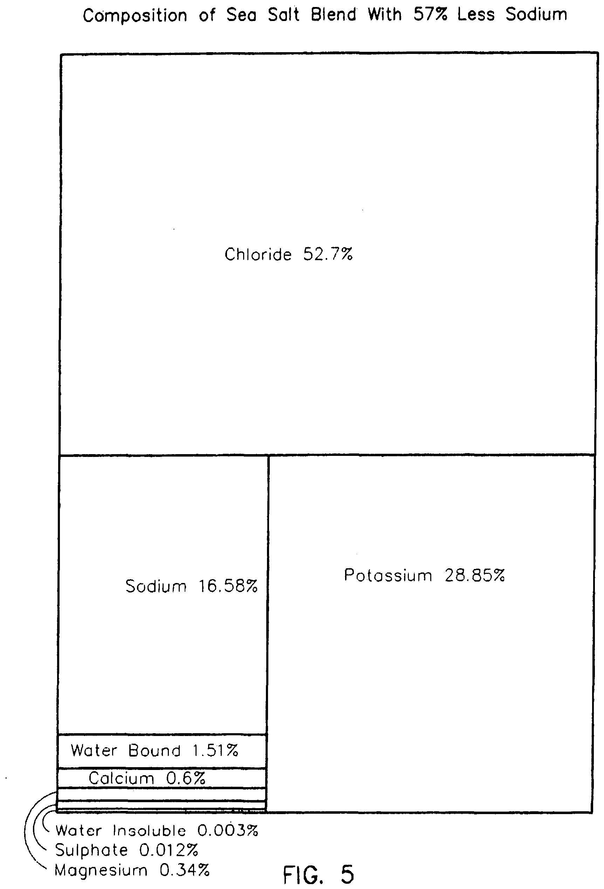

Sea salt may contain sodium chloride, potassium chloride, magnesium, calcium, sulfates, and/or other constituents. Sea water salinity ranges from 3.2% to 4.0%, with the average salinity being about 3.5%. At 3.5% salinity, the sea salt composition comprising the salinity in sea water is about 58.1% chloride, 31.6% sodium, 3.4% magnesium, 3.2% sulfur, 1.2% potassium, 0.6% calcium, 0.2% bromine, and about 1.7% other minor constituents, as is shown in FIG. 4. Approximately 75 trace elements have been found in sea salt. Other important minor constituents of sea salt may include bromine, iron, aluminum, zinc, fluoride, silicon, copper, manganese, and rubidium. The ratio between elements in sea water is generally constant even though the amount of water may vary, which results in a fairly constant ratio between the elements existing in sea salt. Sea salt may also include any sea salt blend containing less than 45% by weight sodium, where the other composition may include potassium, magnesium, chloride, sulfur, and other elements found in sea water. For example, a sea salt blend, with 57% less sodium than ordinary salt, may be obtained from Ocean's Flavor Foods LLCA, Asheville, North Carolina, 28803, product code OF-57LSB. The total amount of sodium in the Ocean's Flavor sea salt blend is 16.58 % (w/w). The Ocean's Flavor Foods, LLC., sea salt blend composition is shown below, in Table 1, as well as in FIG. 5, illustrating 57% less sodium. An additional list of elements discovered in sea water and sea salt may be found in The Handbook of Chemistry and Physics, CRC Publishing, 87th Edition, 2006, p.p. 14-16 to 14-17.

Table 1 - Composition of Ocean's Flavor Natural Sea Salt™ 57% Less Sodium Sea Salt Blend

| Chemical Analysis | %(w/w) |
|---|---|
| Calcium Sulfate, as $CaSO_4$ | 0.017 |
| Magnesium Chloride, as $MgQl_2 \cdot 6H_2O$ | 2.84 |
| Potassium Chloride, as KCl | 55.00 |
| Sodium Chloride, as NACl | 42.14 |
| Water Insoluble | 0.003 |
| TOTAL | 100.0 |

Reduced sodium sea salt, at least for some Ocean's Flavor Foods sea salt products, differs markedly from normal sodium chloride. For instance, OF-57LSB (less sodium natural blend) is a blend of natural sodium chloride and potassium chloride. Furthermore, magnesium chloride and calcium sulfate are present in small amounts. The chemical formula of this salt ($NaCl$-$KCl$-$MgCl$ x $H_2O$) suggests the ingredient goes under physical processing, not chemical processing as claimed. Bench tests indicate if a $NaCl/KCl$ blend was prepared at the same ratio to that found in OF-57LSB, it would taste far more bitter and not as salty as the sea salt. It is possible that processing sets up "mixed crystals." This may potentially hinder taste reception of sour and/or bitter notes associated with these other compounds and still allow salty taste reception. One relevant theory for hindering taste reception is explained in Lawless, Henry T., et al. "The Taste of Calcium and Magnesium Salts and Anionic Modifications." Food Quality and Preference 14:4 (2003): 319-325, incorporated herein by reference. Lawless describes that these compounds, other than sodium chloride, carry at least some salty taste, which may explain why this salt could be perceived as much saltier. Additionally, further reducing the particle size of the ingredient to a preferred 10 microns may increase the salty taste perception.

The taste of sea salt often depends on the source. Sources of sea salt may include Cape Cod, the Cayman Islands, France, Ireland, Italy, the Gulf of Mexico, and Hawaii, as well as many other locations. The flavor, mouthfeel, and color may vary from each source, which is advantageous to a consumer base with differing tastes.

In one embodiment, a seasoning of sea salt, having a mean particle size less than 20 microns, is surrounded, or encapsulated, by a non-aqueous coating. In a specific embodiment, a core of sea salt, having a mean particle size less than 20 microns is encapsulated by a shell composed of edible fat or oil. A sea salt with low copper and iron components is desirable because copper and iron are prooxidants that may contribute to the rancidity of oils. When applied to a surface with aqueous properties, the shell of edible fat or oil prevents the sea salt from dissociating and preserves the crystal structure of the sea salt encapsulate core. During mastication, the shell of the edible fat or oil is ruptured and the sea salt is available for use. The sea salt may be used alone, or in combination with or in replacement of other salts or variety of other ingredients. It will be appreciated that the seasoning may consist of a variety of different seasonings, alone or in combination, without departing from the scope and spirit of the present invention. For example, sea salt may be blended with sodium chloride in ratios ranging from about 1 part sea salt to 1 part sodium chloride to about 7 parts sea salt to 1 part sodium chloride. Potassium chloride, as well as other salts, may be utilized in addition to or with sodium chloride and sea salt.

In another embodiment, large particle seasoning, having a mean particle size greater than 20 microns, and encapsulated small particle sea salt seasoning, having a mean particle size less than 20 microns, may be mixed together. The small particle seasoning and the large particle seasoning may include sodium chloride and/or potassium chloride from sea or land sources. The large particle seasoning may or may not be encapsulated. In a specific embodiment, small encapsulated particles of sea salt, having a mean particle size less than about 20 microns, are mixed with large encapsulated particles of sodium chloride, having a mean particle size of 250 microns. In a separate embodiment, small encapsulated sea salt particles, having a mean particle size of less than 20 microns, are mixed with large particles of sodium chloride without an encapsulating shell, having a mean particle size of 250 microns. Sea salt having a mean particle size less than 20 microns may be combined with other sizes of salt and seasonings.

The encapsulating shell on the particles of sea salt prevents dissociation. Using sea salt having a mean particle size less than about 20 microns distinguishes the seasoning from a normal salt ingredient. The different sizes of the salt particles allow for a constant flavor impact because the small particles dissolve quicker than the larger particles allowing for a greater time period for salt dissolution.

Particle size may refer to the size of a single particle, an agglomerated particle, and/or the core of a coated or partially coated particle. The particle size refers to the mean or average particle size when referring to a designated population of particles, such as in a random distribution of seasoning particles. The term "particle" may refer to a crystalline or lattice structure, regular three dimensional shapes (referring to coordination geometry), and/or irregular shapes having no predefined or specific particle orientation or geometry.

Particle size may be evaluated through use of a particle analyzer. For example, a Malvern Laser Particle Size Analyzer or an optical particle image analyzer may be used to obtain a particle size distribution. The mean particle size may then be determined from the particle size distribution. Particle size in this invention is measured by a laser particle size analyzer.

Herein, particle size generally refers to the size of a single particle, an agglomerated particle, the core of a coated or partially coated particle, and the like. The term "particle" may refer to a crystalline or lattice structure, regular three-dimensional shapes (referring to coordination geometry), and irregular shapes having no predefined or specific particle orientation or geometry. The particle size may be evaluated through use of a particle analyzer. For example, a *Malvern Laser Particle Size Analyzer* or an optical particle image analyzer may be used to obtain a particle size. The mean particle size may then be determined from the particle size distribution. Hereinafter, particle size refers to mean particle size on a distribution curve, and not a sieve analysis. Thus, mean particle size refers to particle size as valued on a distribution curve constructed or plotted utilizing, for example: 1) number of objects, 2) percent by number, 3) percent by mass, or 4) percent by volume (most preferred). Those skilled in the art of particle size analysis will recognize that mean distribution particle size may be determined dry or in a solvent. Additionally, those skilled in the art will appreciate that median particle size may be calculated and utilized herein. The mean is preferred herein. Pursuant to the description of the invention herein, particle size is particle size measured by utilizing a laser particle size analyzer.

Although sieve analysis methodology is an old and often used technique, it does not provide good resolution or repeatability for analysis of finer particle sizes, especially at and under 38 microns (#400 mesh). The salts described herein are measured by particle size analysis because the preferred mean particle size is 10 microns (#1250 mesh). Particle size analysis is a more suitable analysis method because it provides greater resolution and repeatability. An excellent description for calculating and characterizing particle size may be found at: Rawle, A., Basic Principles of Particle Size Analysis, Malvern Instruments Limited, Enigma Business Park, Grovewood Road, Malvern, Worcestershire, WR14 1XZ, UK, incorporated herein by reference. The article may be located at: http://www.malvern.co.uk/malvern/kbase.nsf/allbyno/KB000021/Sfile/Bas ic_principles_of_particle_size_analysis_MRK034-low_res.pdf. Additionally, measuring mean particle size analysis by these two methods will provide two different values. For instance, Cargill's Microsized® 95 Extra Fine Salt is claimed to have an average particle size of 10 microns. However, the sieve analysis methodology uses only one sieve for measurement. Ninety-five percent of the salt falls through a #325 mesh sieve. This indicates that 95% of the salt has a particle size of less than 44 microns. There is no way for calculating an average without including a second, finer sieve placed below the #325 mesh sieve. Particle size analysis of this salt is shown in Table 2 below. Plotting a particle size distribution of this salt suggests the mean particle size is between 18.4 and 20.9 microns. This is a very large difference from a specification standpoint. Shown below is a comparison of the salts described herein with Cargill salt theoretically calculated from a particle size distribution utilizing sieve analysis.

Table 2 - Salt measurement comparing particle size analysis versus sieve analysis methods

| U.S.S. Mesh | Opening (microns) | Cargill Microsized® 95 Extra Fine Salt(%) | Small Particle Salt(%) |
|---|---|---|---|
| 325 | 44 | 8.8 | 0 |
| 400 | 37 | 5.0 | 0.1 |
| 550 | 25 | 10.0 | 2.3 |
| 800 | 15 | 30.2 | 22.0 |
| 1250 | 10 | 15.0 | 15.4 |
| Pan | --- | 31.0 | 60.2 |
| NOTE: Calculated sieve analysis is reported as percent retained. | | | |

The food seasoning may further comprise a second seasoning component selected for complementing the taste impact of the first seasoning component and/or reducing the amount of the first seasoning component required for producing the desired taste impact. In this embodiment, the second seasoning component includes potassium chloride, a bulking agent, and/or a bitterness masking agent. The second seasoning component may include salt, nutrients, coloring, flavoring, anti-caking agents, bulking agents, other functional ingredients, and other flavorings and seasonings as needed. For example, in another specific embodiment, the second seasoning component is potassium chloride, which may additionally include a bitterness masking agent commonly used in the art. The bitterness masking agent may be any additive commonly used in the art to at least one of mask, inhibit, and mitigate the bitter sensation associated with potassium chloride. An exemplary bitterness masking agent is trehalose, as disclosed in U.S. Patent Publication No. 2006/0088649 and U.S. Patent No. 6,159,529. While only sodium chloride elicits a true salt taste, it is foreseeable that an amount of potassium chloride may be used to complement the flavor of sea salt, while reducing the dietary intake of sodium. Because the potassium chloride may impart a bitter flavor to the mixture, however, a bitterness masking agent may be utilized to mitigate this bitter sensation as needed.

Multiple views exist of the mechanism by which tastants elicit taste. For instance, this result may be supported by the lock and key view or the shallow contour view, which are similar to an enzyme/substrate relationship. Under these models, the relationship between the amount of seasoning consumed and the taste impact may be approximated by a simplified dose-response curve, as depicted in FIG. 1. According to these models, a normalized response may be of the form

$$response \propto \frac{1}{1+e^{-A}}$$

where A is the concentration of a tastant. Thus, a given response, such as taste impact on a taste receptor, is dependent upon the concentration of a tastant. A small particle size tastant, such as a sea salt blend, will dissolve into saliva quickly, resulting in a more concentrated solution after a short period of time. A larger particle size of the same sea salt blend will dissolve into saliva more slowly and may result in a lower concentration solution in the same period of time. According to the simplified dose-response curve, the response will be higher for the smaller particle size solution after this short period of time. Response increases for increasing concentration on the simplified dose-response curve. Thus, taste impact increases for increasing concentration of tastant according to these models.

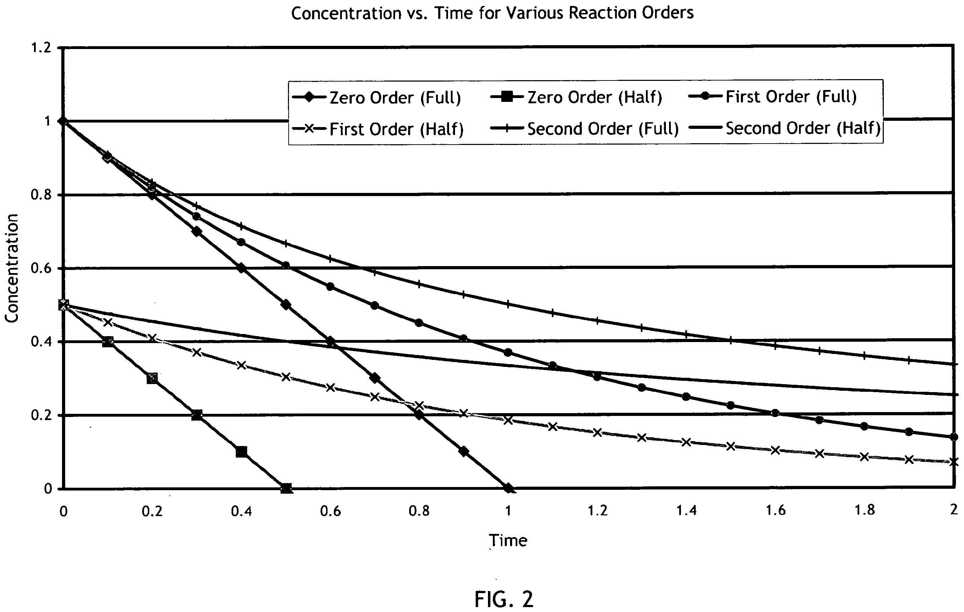

Retaining a desired taste impact may also be approximated by the chemical tastant-receptor interaction model. As explained above, tastes are differentiated by the symmetrical nature of the interactions, in which no chemical products are formed. Thus, the interactions of this model may be approximated by chemical reaction equations solely dependent upon the concentration of the tastant. As shown in FIG. 2, approximate concentration versus time curves for three reaction orders and two initial concentrations are depicted. FIG. 2 is a theoretical graph, where the units for concentration and time are dependant on a theoretical rate constant k, which differs for each reaction order. While no products are formed, the interaction between the chemical tastant and the receptor can be approximated as a product for the purposes of modeling. Also, since the taste receptor cells remain fixed and essentially unchanged by the interaction, the concentration of the tastant is the limiting factor of the reaction rate. So according to this model, the initial concentration of tastant is the driving force for the subsequent "reactions." Since the chemical tastant-receptor interaction model is theoretical, the reaction rate for the tasting "reaction" must also be approximated. FIG. 2 displays three possible reaction rates: zero order (rate is constant), first order (rate $\propto$ [A]), and second order (rate $\propto$ [A]$^2$), where [A] is the concentration of a chemical tastant, such as sodium chloride. These reaction curves are approximate and account for initial doses of tastant, rather than a slow dissolving process. Therefore, this approximation may be viewed in two ways. First, the tastants are given a short time to dissolve before interacting with taste receptors, where no additional tastants are allowed to dissolve. In this instance, smaller particle size seasoning, such as a sea salt blend, will dissolve rapidly, resulting in a larger initial concentration when compared to larger mean particle solutions. When comparing like ordered reactions, the higher initial concentration remains at a higher level throughout the "reaction." Taste cell receptors can distinguish between varying concentrated solutions and may recognize this difference as a difference in taste impact. Second, the tastants are allowed to fully dissolve before interacting with the taste receptors. In this instance, where two different particle sizes are used, the initial concentration would remain the same if the same mass of tastants is used. There would be no difference in the concentrations of the two solutions over time. However, suppose less mass was used for the smaller particle size solution. In this case, the initial concentration would be less. For reaction orders greater than zero, the difference in concentrations between the smaller mean particle solution and the larger mean particle solution becomes smaller as time progresses. The taste impact difference becomes less apparent to an individual with time. These two alternative ways to view this model support using less seasoning with smaller particle size. The smaller particle size will allow a higher concentration solution after a short period of time, and, with regard to total concentration, the difference between a higher concentration and a lower concentration becomes less evident over time (for reaction orders greater than zero). Therefore, less sea salt blend of a smaller particle size (e.g. 10 microns) may be used as a seasoning component, while maintaining the desired taste impact and/or increasing salt taste perception.

As described previously, the second seasoning component may include a bulking agent. The bulking agent may be utilized to further reduce the amount of the first seasoning component required to impart the desired flavor. The bulking agent may comprise starch, maltodextrin, dextrose, other starch derivatives, or other suitable bulking agents which may not adversely affect the flavor and organoleptic properties of the first seasoning component. The bulking agent may further be necessary when applied to a surface with moisture for minimizing salt dissociation.

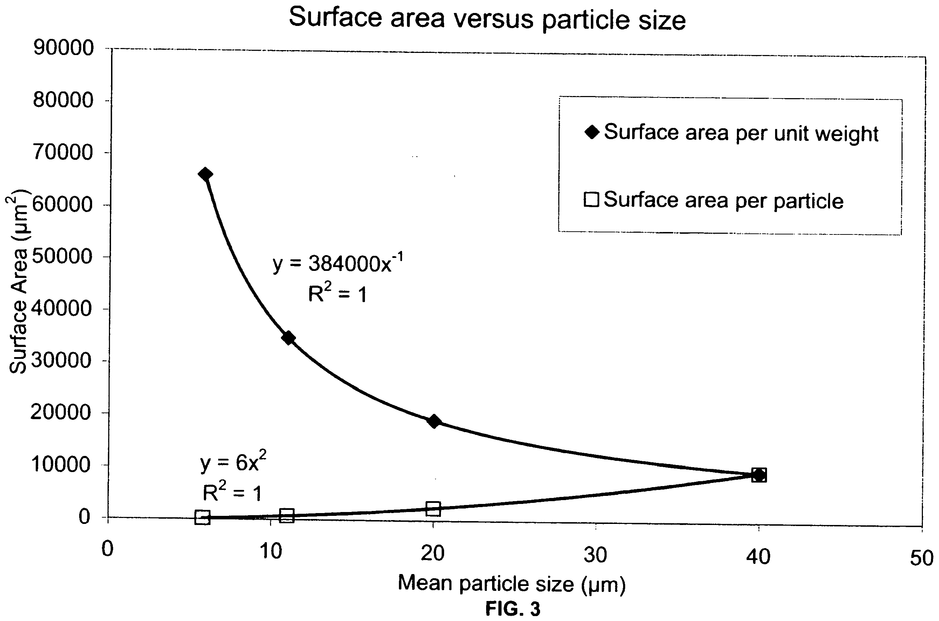

As illustrated in FIG. 3, when mean sea salt particle size decreases for a constant weight, the total surface area increases. Smaller diameter sea salt provides more particles per unit area. This provides the same salt perception with less salt mass. Employing a mean particle size of less than 20 microns, such as a mean particle size of 10 microns, is essential to maximizing the taste impact of the seasoning. Many theories agree that tastants must be water soluble to be tasted. Taste cell receptors exist within taste buds grouped together on the human tongue. These receptors allow humans to detect differences in varying concentrations of materials. For example, taste cell receptors enable an individual to differentiate between a highly concentrated or saturated solution of sea salt dissolved in water and a significantly lesser amount of sea salt fully dissolved in water. A weight of sea salt comprising a small particle size provides more surface area than the same weight of sea salt comprising a larger particle size and the same crystal structure.

In an additional embodiment, a microwave popcorn product is disclosed. The microwave popcorn product includes a charge of popcorn kernels, a charge of sea salt for flavoring the charge of popcorn kernels, and a bag for containing the charge of popcorn kernels and the charge of sea salt, wherein the charge of sea salt has a mean particle size of less than 20 microns. The microwave popcorn product also may include an edible oil, fat, or adhesive configured to adhere the charge of sea salt to the charge of popcorn kernels. Additionally, the edible oil or fat may cover popped popcorn kernels such that the charge of sea salt adheres to the popcorn during microwave cooking: Alternatively, the charge of sea salt may be deposited onto the charge of popcorn kernels prior to microwave cooking. Deposition of the charge of sea salt may replace the need for an adhesive prior to microwave cooking, since deposition methods result in direct adherence of the charge of sea salt to the charge of popcorn kernels.

In another embodiment, a seasoning of sea salt, having a mean particle size less than 20 microns, is surrounded, or encapsulated, by a non-aqueous coating. For example, a particle of sea salt having a mean particle size less than 20 microns may be encapsulated by an edible oil or fat. When applied to a surface with aqueous properties, the layer of edible oil or fat prevents the sea salt from dissociating and preserves the crystal structure of the sea salt encapsulate core. During consumption, the oil or fat layer is ruptured and the sea salt is available for use.

In yet another embodiment, a method for utilizing a sea salt seasoning on microwave popcorn is disclosed. The method for utilizing a sea salt seasoning on microwave popcorn includes the steps selecting a suitable sea salt seasoning, blending the sea salt seasoning with an edible oil or fat, and dispensing the sea salt seasoning into a microwave popcorn bag. A similar embodiment discloses a method for topically utilizing a sea salt seasoning on a food product. The current method includes selecting a suitable sea salt seasoning, placing and/or combining the sea salt seasoning in a dispensing container, and topically dispensing the sea salt seasoning on a suitable food product. The sea salt may be combined with a suitable cookware release composition, such as a liquid edible fat or oil. The sea salt may be dispensed from the dispensing container in different ways.

Descriptive analyses have shown that smaller salt gives a greater taste impact over larger salt and that salt is better distributed when smaller. The methodology of each descriptive analysis is strictly followed to ensure consistent results. Prior to popcorn presentation to taste panelists, a panel technician pops the popcorn in a microwave according to established parameters. Immediately after popping, the popcorn is transferred into a large bowl for a 2 minute wait. After that time, the panel technician scoops popcorn from the main container using a 3.25 ounce translucent polystyrene soufflé cup, filling the cup. The sample portions are immediately presented to the panelists. Due to the nature of the sample and its preparation, samples are presented in a sequential monadic manner.

Each panelist selects four popped kernels from the sample portion and is instructed to choose pieces that best represent the sample presented. For example, if panelist's sample is evenly mixed with highly coated yellow pieces and less coated white pieces, the panelist would choose 2 yellow & 2 white pieces for evaluation. All four pieces are put into the mouth. The panelist evaluates salt impact immediately after putting the pieces into the mouth, defined as within the first two chews, and at the highest point in chewdown, defined as the highest salt impact observed during chewdown.

The panelist is next instructed to collect the sample into a bolus in the center of the mouth and to forcefully expectorate the sample after evaluation. Expectoration is used to ensure that the majority of sample is removed from mouth. Using an individual timer, each panelist starts the timer and further evaluates salt impact immediately after expectoration and thirty seconds after expectoration. Each panelist records the data using a paper ballot with the evaluation attributes preprinted on the ballot as well as places to record the date, panelist number, sample number, and attribute intensities by sample.

At the beginning of each session, the panelists are instructed not to lick their lips during evaluation, to rinse the mouth thoroughly with room temperature spring water after evaluations, and to wipe their lips between evaluations. The samples are staggered for evaluation at least five minutes apart. The strength of each attribute is rated on a 0 - 15 point intensity scale with zero being no strength and fifteen being high strength. This scale incorporates the ability to use tenths of a point and has the potential of 150 scale differentiations. If needed, intensities may be rated greater than fifteen using the same scaling criteria.

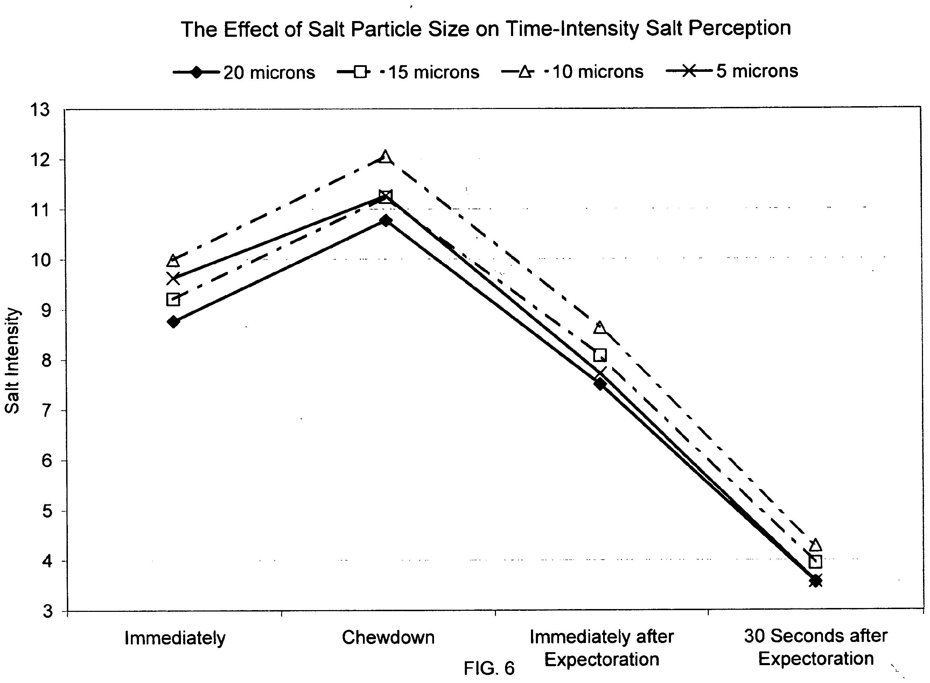

Descriptive analyses have shown smaller particle salt delivers a greater taste impact over larger particle salt. The results of one descriptive analysis are illustrated in FIG. 6. FIG. 6 shows the effect of salt particle size on salt perception by measuring salt intensity determined by a trained sensory panel at four predetermined times. As best illustrated in FIG. 6, salt having a mean particle size of 10 microns achieves the greatest salt intensity.

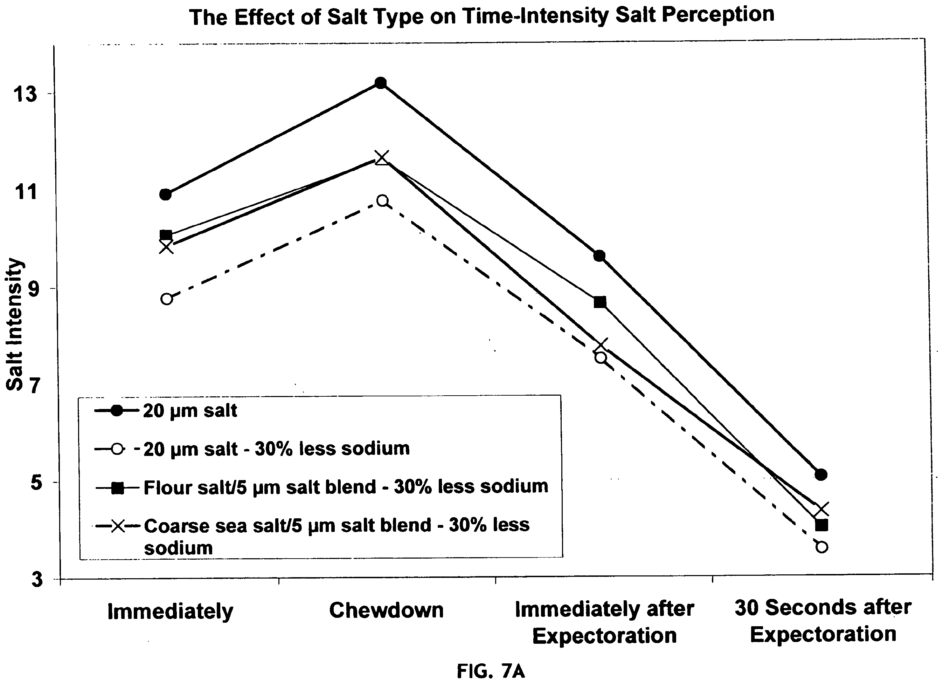

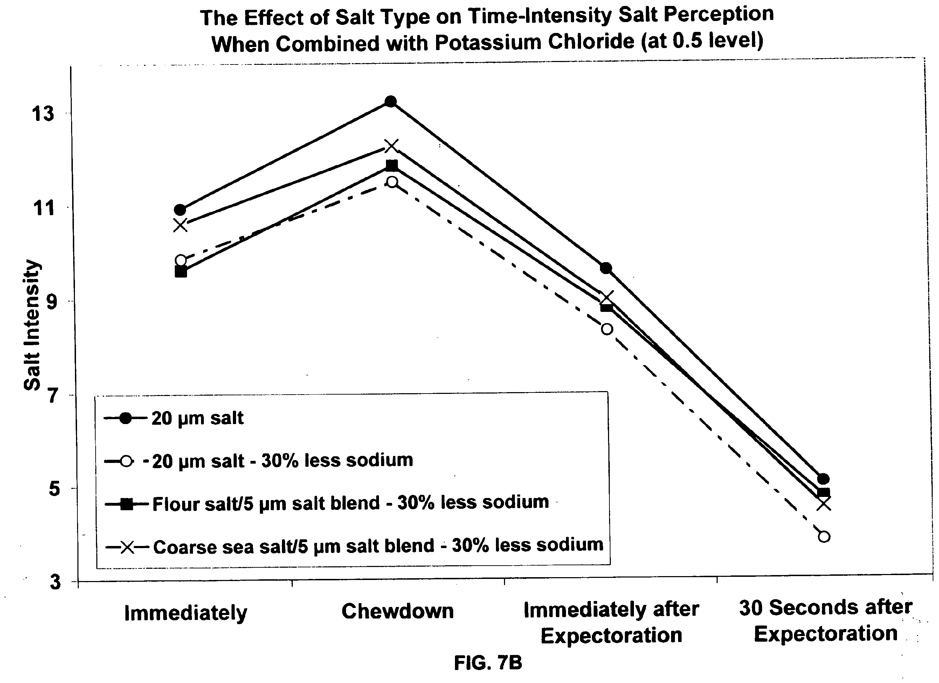

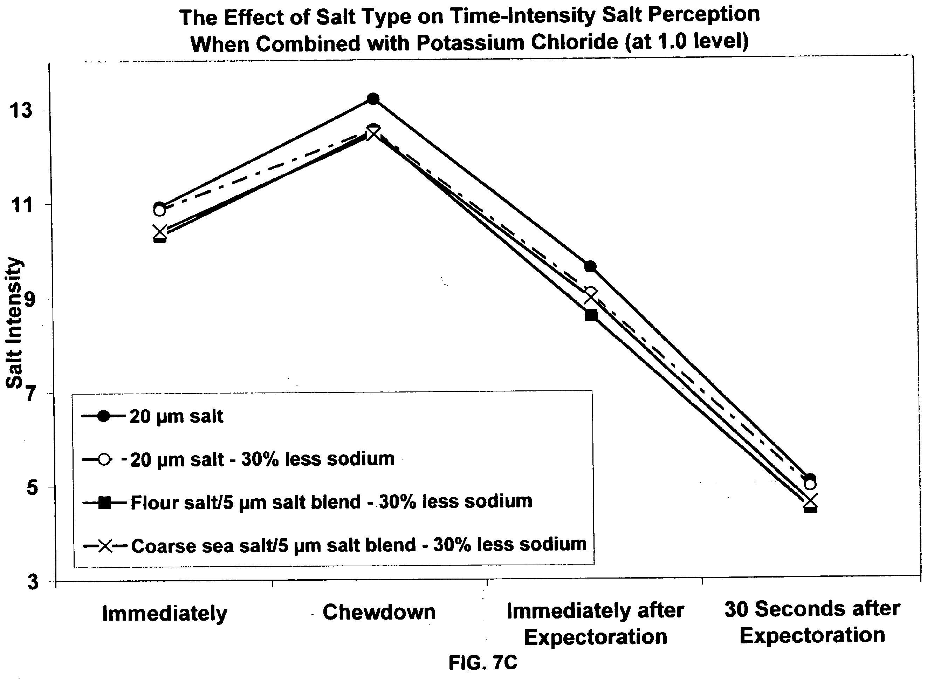

It has been shown by descriptive analyses that that coarse sea salt has a saltier flavor than coarse sodium chloride. For testing purposes, the coarse sea salt utilitized was product code OF-57LSB, by Ocean's Flavor Foods LLCA. However, other forms of coarse sea salt are available and exemplary. FIG. 7A is a graph illustrating the effect of salt type on the intensity of salt taste perception at four predetermined times. FIG. 7B is a graph illustrating the effect of salt type on the intensity of salt type at four predetermined times wherein potassium chloride is blended with the salt at a ratio of 0.5 potassium chloride to the amount of salt removed. FIG. 7C is a graph illustrating the effect of salt particle size on the intensity of salt type at four predetermined times wherein potassium chloride is blended with the salt at a ratio of 1.0 potassium chloride to the amount of salt removed. The flour salt was 152 microns while the coarse sea salt was 510 microns. This is a large difference in particle size; however, there is still a saltier perception for the much coarser sea salt. This is best displayed in FIG. 7B where the coarse sea salt blend is perceived to be 1 full hedonic point greater in saltiness than the flour salt blend. FIG. 7A and 7C demonstrate similar saltiness between the two blends, despite the much larger granulation of the sea salt.

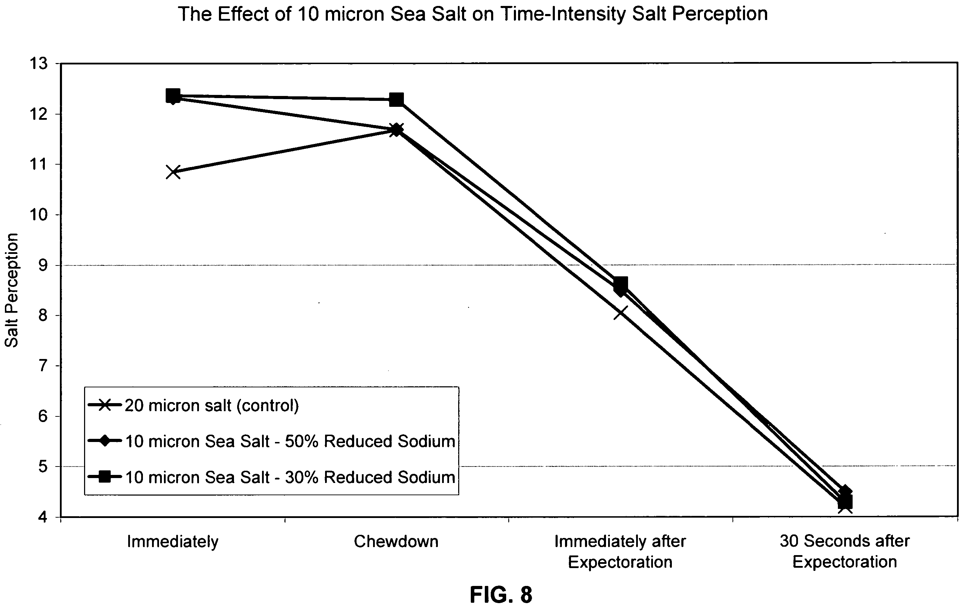

FIG. 8 shows the results of a descriptive analysis that used the same methodology described with respect to the results of Figures 6 and 7A-C. An analysis of the smaller particle sea salt was conducted, utilizing a control sample microwave popcorn product having typical levels of sodium from an industry standard salt. The test samples of popcorn product were formulated to have overall less sodium than compared to the control by using sea salt (OF-57LSB) specially milled to 10 microns. FIG. 8 shows that using 10 micron sea salt achieves a popcorn product with 30% less sodium than the control, while having similar saltiness perception to that of the control. A sea salt formulation achieving a 50% overall reduced sodium popcorn product displayed similar results. It will be appreciated by one of skill in the art that other sea salt variations are included and comtemplated to achieve similar overall results.

The positive effect of seasoning less than 20 microns, including sodium chloride, potassium chloride, sea salt, and combinations thereof were tested on consumers. The methodology and results of the test are discussed below.

A total of one hundred consumers in Chicago, Illinois were recruited to participate in the Butter flavor microwave popcorn comparison taste tests. The panelists were recruited from those who purchase and consume Butter Flavor Microwave Popcorn at least twice every month. Also, panelists had no food allergies, and no one in their immediate family who worked for a food company, in advertising, or for a market research company. Panelists were between the ages of 18-55 years of age (78% female; 22% male), and had not participated in a taste test within the last two months. Products were prepared as instructed on the bag. Multiple microwaves were used in the preparation of the product and samples were rotated evenly among the microwaves used. Each panelist tasted and consumed 4 samples of Butter Flavor microwave popcorn. Serving orders were randomized and balanced for order and position effects. A sequential monadic serving procedure was used. A computerized ballot using Compusense testing software was used for the collection of responses. A total of six questions were asked with four regarding whether the product was liked and two regarding flavor intensity. A 9-point anchored hedonic scale was used for the liking questions and a 10-point intensity scale was used for the intensity questions. Results were analyzed using SAS Statistical software for the Analysis of Variance. A 90% confidence level was used to determine significant statistical difference between samples.

Table 3 displays the results of the consumer testing described above. Test formulas included: 30% reduced sodium using a 10 micron sea salt/pulverized salt blend, 50% reduced sodium using 10 micron sea salt, and 30% reduced sodium using 10 micron sea salt. Results indicate that all test formulas had similar or greater saltiness intensity than the control formula. In particular, significantly higher saltiness was perceived in the 30% reduced sodium samples containing sea salt alone. The product was likely far too salty, thus overall product liking was significantly lower than the control as a result. Reducing sodium by 50% using 10 micron sea salt resulted in similar saltiness intensity to the control. Overall liking scores were at parity with the control, however directionally lower. The blended test formula performed the best with slightly higher saltiness and similar overall liking compared to the control.

Table 3 - Mean Liking Scores of Orville Butter Made with Small Particle Sea Salts

| | Control (Morton 200) | 10 μm sea salt & Morton 200 blend (30% reduced sodium) | 10 μm sea salt (50% reduced sodium) | 10 μm sea salt (30% reduced sodium) |
|---|---|---|---|---|
| Overall product liking (9pt) | 7.2a | 6.9 ab | 6.8 ab | 6.5 b |
| Flavor liking (9pt) | 7.2a | 6.7 ab | 6.8 ab | 6.4 b |
| Butter flavor liking (9pt) | 7.0a | 6.5 ab | 6.7 ab | 6.4 b |
| Saltiness liking (9pt) | 6.6a | 6.3 a | 6.2 ab | 5.7 b |
| Butter flavor intensity (10pt) | 6.5a | 5.9 ab | 5.8 b | 5.4 b |
| Saltiness intensity (10pt) | 5.3b | 6.0 b | 5.5 b | 7.0 a |
| Means having different letters are significantly different at alpha=0.1 N=100<br>For Hedonic measures: A 9-point hedonic scale was used (ranging from 1=dislike extremely to 9=like extremely).<br>For intensity measures: A 10-cm line scale was used.<br>Note: *Intensity scales measure the degree to which consumers rate products as different or not different in amount or intensity of specific attributes. It does not indicate liking.* | | | | |

The following list of examples and tables is exemplary and explanatory only and is not necessarily restrictive of the invention as claimed.

The following four tables disclose examples of small particle sea salt and sodium chloride utilized in microwave popcorn recipes. These formulations represent a 50% reduction in sodium compared to current products. Sea salt to salt ratios may change depending on the amount of sodium reduction desired. Additionally, salty flavor may be greatly enhanced when replacing standard salt with sea salt when a sodium reduction is not desired.

Table 4 - Orville Redenbacher's® Smart Pop! Gourmet®, Butter

| Ingredient | Typical Wt.% Ultra low fat | Wt.% in preferred composition Ultra low fat | Example (grams per bag) Ultra low fat |
|---|---|---|---|
| Unpopped Popcorn | 93-97 | 93-96 | 76.4 |
| Oil/Fat | 1.5-4 | 1.5-3.5 | 2.13 |
| Sea Salt | 1-6 | 1-3 | 1.49 |
| Salt | 0-3 | 0.1-1.5 | 0.37 |
| Flavor | 0.05-3 | 0.2-1 | 0.37 |
| Color | 0.01-1 | 0.01-0.08 | 0.02 |

Table 5 - Orville Redenbacher's® Light Gourmet®, Butter

| Ingredient | Typical Wt.% Low fat or light fat | Wt.% in preferred composition Low fat or light fat | Example (grams per bag) Low fat or light fat |
|---|---|---|---|
| Unpopped Popcorn | 75-90 | 80-86 | 67.9 |
| Oil/Fat | 9-17 | 11-15 | 10.5 |

(continued)

| Ingredient | Typical Wt.% Low fat or light fat | Wt.% in preferred composition Low fat or light fat | Example (grams per bag) Low fat or light fat |
|---|---|---|---|
| Sea Salt | 1-6 | 1-3 | 1.64 |
| Salt | 0-3 | 0.2-1.0 | 0.41 |
| Flavor | 0.1-0.5 | 0.2-0.4 | 0.28 |
| Color | 0.01-2 | 0.02-1 | 0.04 |

Table 6 - Orville Redenbacher's® Gourmet®, Butter

| Ingredient | Typical Wt.% Typical fat | Wt.% in preferred composition Typical fat | Example (grams per bag) Typical fat |
|---|---|---|---|
| Unpopped Popcorn | 60-70 | 64-67 | 61.5 |
| Oil/Fat | 25-37 | 29-33 | 28.91 |
| Sea Salt | 1-6 | 1-4 | 1.97 |
| Salt | 0-3 | 0.3-2 | 0.49 |
| Flavor | 1-3 | 0.25-1 | 0.43 |
| Color | 0.01-0.1 | 0.02-0.6 | 0.04 |

Table 7 - Orville Redenbacher's®, Sweet N' Buttery

| Ingredient | Typical Wt.% High fat | Wt.% in preferred composition High fat | Example (grams per bag) High fat |
|---|---|---|---|
| Unpopped Popcorn | 52-66 | 57-61 | 54.8 |
| Oil/Fat | 28-39 | 31-36 | 31.48 |
| Sea Salt | 1-6 | 1-4 | 1.3 |
| Salt | 0-3 | 0.25-2 | 0.33 |
| Flavor | 0.1-4 | 0.3-1 | 0.47 |
| Color | 0.02-1.5 | 0.03-1 | 0.06 |

EXAMPLE 1

This example presents an application of small particle sea salt as a component of breadings or toppings for frozen or refrigerated foods. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The food products may include poultry, red meat, fish, baked goods, vegetables, or other appetizers including potatoes, onions, or cheeses, and may contain seasoning, flour, wheat, cornmeal, nuts (tree or legumes), and/or soybeans. Processes may include frying, baking, roasting, partial or fully cooking, or extrusion. Specific examples may include breaded zucchini, mozzarella, mushrooms, or chicken, flavored or unflavored onion rings, potato products (i.e., French fries), pastry pie crumb topping, or breaded pasta (i.e., toasted ravioli).

EXAMPLE 2

This example presents an application of small particle sea salt as a component for dry mix breadings for the covering of food products. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The food products may include poultry, red meat, fish, baked goods, vegetables, or other appetizers including potatoes, onions, or cheeses, and may contain seasoning, flour, wheat, cornmeal, nuts (tree or legumes), and/or soybeans. Processes may include frying, baking, roasting, partial or fully cooking, or extrusion. A specific example includes SHAKE 'N BAKE®, manufactured by Kraft Foods, Inc.

EXAMPLE 3

This example presents an application of small particle sea salt as a component in a seasoning blend for a topical application. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The food products may include poultry, red meat, fish, baked goods, vegetables, or other appetizers including potatoes, onions, or cheeses (topical or non-aqueous). The topical application may include seasonings or bulking agents. A specific example may include seasoning salt.

EXAMPLE 4

This example presents an application of small particle sea salt as a component in cured and non-cured dried meats as a topical additive. Further in the following example, the use of small particle sea salt in exchange of the existing salt will produce a saltier flavor than using the industry-standard salt. Alternatively, salt (or sodium) levels may be decreased using small particle sea salt and still, achieve similar saltiness taste perception. The sea salt may additionally be encapsulated in an edible fat or oil. The meats may include beef, bacon, or bacon-flavored mimics. The dried meats may be dried, freeze-dried, extruded or baked. A specific example includes bacon bits.

EXAMPLE 5

This example presents an application of small particle sea salt as a component in non-snack, cereal-based food compliments. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The cereal-based food compliments may include bread, wheat, corn, oats, millet, rye, soybeans, cornmeal, seasoning, nuts (tree or legumes), and/or rice, and may be processed by baking, frying, extruding, puffing, drying, or may be left unprocessed. Specific examples may include croutons or bread crumbs.

EXAMPLE 6

This example presents an application of small particle sea salt as a direct addition to natural and artificial spreads. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The natural or artificial spreads may contain nuts (tree or legumes), nut ingredients, soybeans, and/or seeds. Specific examples may include hazelnut spread, soy butter, or peanut butter.

EXAMPLE 7

This example presents an application of small particle sea salt for use as a direct addition or part of articles in non-aqueous batters. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The batters may include edible fats and oils, flour, salt, seasoning, wheat, corn, cornmeal, nuts (tree or legume), and/or soybeans. Specific examples include potato wedges, onion rings, fish, and cheese sticks.

EXAMPLE 8

This example presents an application of small particle sea salt for use as a direct addition to prepared pie crusts. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The pie crusts may contain seasoning, flour, wheat, corn, cornmeal, nuts (trees or legumes), and/or soybeans. A specific example is a graham cracker pie crust.

EXAMPLE 9

This example presents an application of small particle sea salt added to a dried, grated, or shredded cheese for topical use. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The cheese may be dried or dehydrated. Specific examples include parmesan, romano, asiago, or other dried, grated or, shredded cheeses with salt and other ingredients.

EXAMPLE 10

This example presents an application for the direct addition of small particle sea salt into oil or fat-based products. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The oil or fat based products may be natural, conditioned, de-gummed, stabilized, deodorized, homogenized, bleached, or winterized. The oil or fat products may contain partially or fully hydrogenated oil and fat based products. Uses may include confectionary non-aqueous fillings, sprays, liquid or solid flavored edible cooking oils or fats. Specific examples may include Oreo filling, manufactured by Nabisco, PAM spray, manufactured by ConAgra Foods, Inc., or butter flavored vegetable shortening. An oil based slurry, such as PAM with small particle salt, may be topically applied to French fries, potato chips, or the like.

EXAMPLE 11

This example presents an application of small particle sea salt as an application for cereals and cereal bars. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The cereal or cereal bars may include bread, wheat, corn, oat, millet, rye, soybeans, cornmeal, seasoning, nuts (tree or legumes), rice, and/or granola processed by baking, extruding, roasting, toasting, frying, drying, or puffing. Specific examples may include any type of breakfast cereal, or any type of granola bar that is non-aqueous, pressed, and formed.

EXAMPLE 12

This example presents a topical application of small particle sea salt for vegetables and fruits. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The vegetables and fruits may be freeze-dried or processed other ways. A specific example is Gerber freeze-dried sweet corn for babies, manufactured by the Gerber Products Company.

EXAMPLE 13

This example presents a topical application of small particle sea salt for snack foods. Further in the following example, the use of small particle sea salt in exchange of the existing salt will produce a saltier flavor than using the industry-standard salt. Alternatively, salt (or sodium) levels may be decreased using small particle sea salt and still achieve similar saltiness taste perception. The sea salt may additionally be encapsulated in an edible fat or oil. The snack foods may contain rice, oats, corn, soybeans, wheat, cornmeal, flour, seasoning, potato, rye, millet, and/or nuts (tree and legumes). The snack foods may be flavored and unflavored snack crackers, crisps, cakes, mixes, chips, shells, cookies, crackers, pork rinds, and may be toasted, roasted, baked, fried, extruded, puffed, and the like. Specific examples may include potato chips (i.e. Pringles, manufactured by Procter & Gamble), Chex mix, manufactured by General Mills, Inc., pork rinds, corn chips, popcorn, soy or rice cakes, popcorn that is microwavable or ready-to-eat, saltines, Chips Ahoy cookies, manufactured by Nabisco, bagel chips, pita chips, Planters peanuts, manufactured by Kraft Foods Global, Inc., and other similar products.

**Claims**

1. Use of a seasoning composition, comprising small particle sea salt having a mean particle size of less than 20 microns, for reducing dietary sodium intake.

2. Use of the seasoning composition of claim 1, wherein the seasoning composition comprises one or more of potassium chloride salt, a bulking agent, a bitterness masking agent, a flavouring agent, or a colouring agent.

3. Use of the seasoning composition of claim 2, wherein the potassium chloride salt comprises a mean particle size of 20 microns or less.

4. Use of the seasoning composition of claim 2 or claim 3, wherein the seasoning comprises an amount of potassium chloride salt that is 0.5 or 1.0 times the amount of reduced sodium.

5. Use of the seasoning composition of any one of claims 2 to 4, wherein the bulking agent comprises starch, maltodextrin, or dextrose.

6. Use of the seasoning composition of any one of claims 1 to 5, wherein the small particle sea salt comprises sea salt obtained from evaporated sea water, a mixture of salt obtained from evaporated sea water, a modified salt obtained by evaporating sea water, or synthetic sea salt.

7. Use of the seasoning composition of any one of claims 1 to 6, wherein the small particle sea salt comprises less than 45% sodium by weight.

8. Use of the seasoning composition of any one of claims 1 to 7, wherein the small particle sea salt comprises a mean particle size of 15 microns, 10 microns, or 5 microns.

9. Use of the seasoning composition of any one of claims 1 to 8, wherein the seasoning composition is deposited on a surface of a food product.

10. Use of a seasoned food product, comprising a food product and a seasoning composition according to any one of claims 1 to 8 deposited on a surface of the food product, for reducing dietary sodium intake.

11. Use of the seasoned food product of claim 10, wherein the seasoning composition is deposited on the food product via a sprayed oil and seasoning dispersion.

12. Use of the seasoned food product of claim 10 or claim 11, wherein the food product is a snack food product.

13. Use of the seasoned food product of claim 12, wherein the snack food product is a peanut, pretzel, popcorn, cracker, chip, crisp, pork rind, or soy or rice cake product.

14. Use of the seasoned food product of any one of claims 10 to 13, wherein the food product is one or more of toasted, roasted, baked, fried, extruded, and puffed.

15. Use of the seasoning composition of claim 9, wherein the small particle sea salt is deposited on the food product via a sprayed oil and seasoning dispersion.

**Patentansprüche**

1. Verwendung einer Würzzusammensetzung, die kleinpartikuläres Meersalz mit einer mittleren Partikelgröße von weniger als 20 $\mu$m enthält, zum Reduzieren der Natriumaufnahme in der Nahrung.

2. Verwendung einer Würzzusammensetzung nach Anspruch 1, wobei die Würzzusammensetzung eines oder mehrere aus Kaliumchloridsalz, einem Füllstoff, einem Bitterkeitsmaskierungsstoff, einem Aromastoff und einem Farbstoff umfasst.

3. Verwendung der Würzzusammensetzung nach Anspruch 2, wobei das Kaliumchloridsalz eine mittlere Partikelgröße von 20 μm oder weniger hat.

4. Verwendung der Würzzusammensetzung nach Anspruch 2 oder Anspruch 3, wobei die Würze eine Menge an Kaliumchloridsalz umfasst, die das 0,5 oder 1,0 fache der Menge an reduziertem Natrium beträgt.

5. Verwendung der Würzzusammensetzung nach einem der Ansprüche 2 bis 4, wobei der Füllstoff Stärke, Maltodextrin oder Dextrose umfasst.

6. Verwendung der Würzzusammensetzung nach einem der Ansprüche 1 bis 5, wobei das kleinpartikuläre Meersalz Meersalz beinhaltet, das von verdampftem Meerwasser, einem von verdampftem Meerwasser gewonnenem Salzgemisch, einem durch Verdampfen von Meerwasser gewonnenem modifiziertem Salz oder synthetischem Meersalz gewonnen wurde.

7. Verwendung der Würzzusammensetzung nach einem der Ansprüche 1 bis 6, wobei das kleinpartikuläre Meersalz weniger als 45 Gew.-% Natrium umfasst.

8. Verwendung der Würzzusammensetzung nach einem der Ansprüche 1 bis 7, wobei das kleinpartikuläre Meersalz eine mittlere Partikelgröße von 15 μm, 10 μm oder 5 μm hat.

9. Verwendung der Würzzusammensetzung nach einem der Ansprüche 1 bis 8, wobei die Würzzusammensetzung auf eine Oberfläche eines Lebensmittelprodukts aufgebracht wird.

10. Verwendung eines gewürzten Lebensmittelprodukts, das ein Lebensmittelprodukt und eine Würzzusammensetzung nach einem der Ansprüche 1 bis 8 umfasst, aufgebracht auf eine Oberfläche des Lebensmittelprodukts, zum Reduzieren der Natriumaufnahme in der Nahrung.

11. Verwendung des gewürzten Lebensmittelprodukts nach Anspruch 10, wobei die Würzzusammensetzung über eine gesprühte Öl- und Würzdispersion auf das Lebensmittelprodukt aufgebracht wird.

12. Verwendung des gewürzten Lebensmittelprodukts nach Anspruch 10 oder Anspruch 11, wobei das Lebensmittelprodukt ein Imbissprodukt ist.

13. Verwendung des gewürzten Lebensmittelprodukts nach Anspruch 12, wobei das Imbissprodukt ein Erdnuss-, Brezel-, Popcorn-, Keks-, Chip-, Crisp-, Schweineschwarte- oder Soja- oder Reiskuchenprodukt ist.

14. Verwendung des gewürzten Lebensmittelprodukts nach einem der Ansprüche 10 bis 13, wobei das Lebensmittelprodukt eines oder mehrere aus getoastet, geröstet, gebacken, gebraten, extrudiert und gepufft ist.

15. Verwendung der Würzzusammensetzung nach Anspruch 9, wobei das kleinpartikuläre Meersalz über eine gesprühte Öl- und Würzdispersion auf das Lebensmittelprodukt aufgebracht wird.

**Revendications**

1. Utilisation d'une composition d'assaisonnement, comprenant de petites particules de sel de mer ayant une taille de particule moyenne inférieure à 20 microns, pour réduire la prise alimentaire de sodium.

2. Utilisation de la composition d'assaisonnement selon la revendication 1, dans laquelle la composition d'assaisonnement comprend un ou plusieurs d'un sel chlorure de potassium, d'un agent de masse, d'un agent masquant l'amertume, d'un aromatisant, ou d'un colorant.

3. Utilisation de la composition d'assaisonnement selon la revendication 2, dans laquelle le sel chlorure de potassium a une taille de particule moyenne de 20 microns ou moins.

**4.** Utilisation de la composition d'assaisonnement selon la revendication 2 ou selon la revendication 3, dans laquelle l'assaisonnement comprend une quantité du sel chlorure de potassium qui est de 0,5 ou 1,0 fois la teneur réduite en sodium.

**5.** Utilisation de la composition d'assaisonnement selon l'une quelconque des revendications 2 à 4, dans laquelle l'agent de masse comprend l'amidon, la maltodextrine, ou le dextrose.

**6.** Utilisation de la composition d'assaisonnement selon l'une quelconque des revendications 1 à 5, dans laquelle les petites particules de sel de mer comprennent un sel de mer obtenu à partir d'eau de mer évaporée, un mélange de sel obtenu à partir d'eau de mer évaporée, un sel modifié obtenu par évaporation d'eau de mer, ou un sel de mer synthétique.

**7.** Utilisation de la composition d'assaisonnement selon l'une quelconque des revendications 1 à 6, dans laquelle les petites particules de sel de mer comprennent moins de 45 % en poids de sodium.

**8.** Utilisation de la composition d'assaisonnement selon l'une quelconque des revendications 1 à 7, dans laquelle les petites particules de sel de mer ont une taille de particule moyenne de 15 microns, 10 microns, ou 5 microns.

**9.** Utilisation de la composition d'assaisonnement selon l'une quelconque des revendications 1 à 8, dans laquelle la composition d'assaisonnement est déposée sur une surface d'un produit alimentaire.

**10.** Utilisation d'un produit alimentaire assaisonné, comprenant un produit alimentaire et une composition d'assaisonnement selon l'une quelconque des revendications 1 à 8 déposée sur une surface du produit alimentaire, pour réduire la prise alimentaire de sodium.

**11.** Utilisation du produit alimentaire assaisonné selon la revendication 10, dans laquelle la composition d'assaisonnement est déposée sur le produit alimentaire par l'intermédiaire d'une dispersion d'huile et d'assaisonnement pulvérisée.

**12.** Utilisation du produit alimentaire assaisonné selon la revendication 10 ou selon la revendication 11, dans laquelle le produit alimentaire est un produit de type snack.

**13.** Utilisation du produit alimentaire assaisonné selon la revendication 12, dans laquelle le produit de type snack est un produit sous forme de cacahuètes, de bretzels, de popcorn, de biscuits, de frites, de chips, de grattons, ou un produit à base de soja ou un gâteau de riz.

**14.** Utilisation du produit alimentaire assaisonné selon l'une quelconque des revendications 10 à 13, dans laquelle le produit alimentaire est un ou plusieurs de produits grillés, rôtis, cuits au four, frits, extrudés, et soufflés.

**15.** Utilisation de la composition d'assaisonnement selon la revendication 9, dans laquelle les petites particules de sel de mer sont déposées sur le produit alimentaire par l'intermédiaire d'une dispersion d'huile et d'assaisonnement pulvérisée.

Simplified Dose-Reponse Curve

FIG. 1

EP 2 083 640 B1

Concentration vs. Time for Various Reaction Orders

FIG. 2

## Surface area versus particle size

Legend:
- ◆ Surface area per unit weight
- ☐ Surface area per particle

$y = 384000x^{-1}$
$R^2 = 1$

$y = 6x^2$
$R^2 = 1$

Mean particle size (μm)

**FIG. 3**

Composition of Typical Sea Salt

Chloride 58.1%

Magnesium
3.4%

Sulfur 3.2%

Sodium 31.6%

Potassium
1.2%

Calcium 0.6%

Other 1.7%

Bromine 0.2%

FIG. 4

Composition of Sea Salt Blend With 57% Less Sodium

Chloride 52.7%

Sodium 16.58%

Potassium 28.85%

Water Bound 1.51%

Calcium 0.6%

Water Insoluble 0.003%
Sulphate 0.012%
Magnesium 0.34%

FIG. 5

The Effect of Salt Particle Size on Time-Intensity Salt Perception

—◆—20 microns    —□· ·15 microns    —△· ·10 microns    —✕—5 microns

FIG. 6

EP 2 083 640 B1

**The Effect of Salt Type on Time-Intensity Salt Perception**

Salt Intensity

13
11
9
7
5
3

- ●— 20 µm salt
- ─○─ 20 µm salt - 30% less sodium
- ─■─ Flour salt/5 µm salt blend - 30% less sodium
- ─✕─ Coarse sea salt/5 µm salt blend - 30% less sodium

Immediately    Chewdown    Immediately after Expectoration    30 Seconds after Expectoration

**FIG. 7A**

EP 2 083 640 B1

The Effect of Salt Type on Time-Intensity Salt Perception
When Combined with Potassium Chloride (at 0.5 level)

Legend:
- ● 20 μm salt
- ○ 20 μm salt - 30% less sodium
- ■ Flour salt/5 μm salt blend - 30% less sodium
- ✕ Coarse sea salt/5 μm salt blend - 30% less sodium

Y-axis: Salt Intensity

X-axis: Immediately, Chewdown, Immediately after Expectoration, 30 Seconds after Expectoration

FIG. 7B

EP 2 083 640 B1

The Effect of Salt Type on Time-Intensity Salt Perception
When Combined with Potassium Chloride (at 1.0 level)

**Salt Intensity**

Legend:
- —●— 20 μm salt
- —O— 20 μm salt - 30% less sodium
- —■— Flour salt/5 μm salt blend - 30% less sodium
- —X— Coarse sea salt/5 μm salt blend - 30% less sodium

Immediately    Chewdown    Immediately after    30 Seconds after
                           Expectoration        Expectoration

FIG. 7C

EP 2 083 640 B1

The Effect of 10 micron Sea Salt on Time-Intensity Salt Perception

Legend:
- —✕— 20 micron salt (control)
- —◆— 10 micron Sea Salt - 50% Reduced Sodium
- —■— 10 micron Sea Salt - 30% Reduced Sodium

Y-axis: Salt Perception

X-axis: Immediately | Chewdown | Immediately after Expectoration | 30 Seconds after Expectoration

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060088649 A

- US 6159529 A

**Non-patent literature cited in the description**

- The Handbook of Chemistry and Physics. CRC Publishing, 2006, 14-16-14-17
- **LAWLESS, HENRY T. et al.** The Taste of Calcium and Magnesium Salts and Anionic Modifications. *Food Quality and Preference,* 2003, vol. 14 (4), 319-325

- **RAWLE, A.** Basic Principles of Particle Size Analysis. Malvern Instruments Limited